# EUROPÄISCHE PATENTSCHRIFT

(11) **EP 1 927 772 B1**
(45) Veröffentlichungstag und Bekanntmachung des Hinweises auf die Patenterteilung: **07.01.2015**
(21) Anmeldenummer: 07022456.3
(22) Anmeldetag: 20.11.2007
(51) Int. Cl.: F16C 29/06, F16C 29/00

(54) **Linearlageranordnung**
Linear bearing assembly
Agencement de palier linéaire

(30) Priorität: 01.12.2006 DE 102006056767
(43) Veröffentlichungstag der Anmeldung: 04.06.2008
(73) Patentinhaber: AB SKF, 415 50 Göteborg (SE)
(72) Erfinder: Edelmann, Ludwig, 97717 Sulzthal (DE); Velde, Henryk, 97440 Werneck (DE); Gransow, Anita, 97526 Sennfeld (DE); Jeschka, Erwin, 97711 Maßbach (DE)
(74) Vertreter: Kohl, Thomas

(56) Entgegenhaltungen:
- DE-A1- 2 227 312
- GB-A- 1 028 952
- US-A- 3 353 876

## Beschreibung

Die Erfindung betrifft eine Linearlageranordnung für Linearbewegungen. Weiterhin betrifft die Erfindung die Verwendung einer Hülse bei einer Linearlageranordnung.

Linearlageranordnungen ermöglichen eine präzise Ausführung von Linearbewegungen mit einem relativ geringen Kraftaufwand und sind in einer Vielzahl von unterschiedlichen Ausführungen bekannt. Die hohe Präzision und Leichtgängigkeit einer Linearlageranordnung lässt sich beispielsweise dadurch erreichen, dass ein Satz von Wälzkörpern auf einem langgestreckten Innenteil abrollt. Dabei besteht zum einen die Möglichkeit das Innenteil ortsfest zu verankern, so dass die Abrollbewegung der Wälzkörper mit einer linearen Bewegung eines Außenteils korreliert, welches das Innenteil und die Wälzkörper umgibt und analog zum Innenteil mit den Wälzkörpern in Wälzkontakt steht. Zum anderen ist es auch möglich, das Außenteil ortsfest zu verankern, so dass die Abrollbewegung der Wälzkörper mit einer linearen Bewegung des Innenteils korreliert.

Es ist bekannt, das Innenteil als ein aufwendig bearbeitetes gehärtetes Massivteil auszubilden. Derartig ausgebildete Innenteile sind jedoch relativ teuer in der Herstellung. Weiterhin ist es bzgl. der Führung von Stangen mit rechteckigem Querschnitt bereits bekannt, zusätzlich zur Stange ein relativ komplex ausgebildetes Blechteil als Innenteil vorzusehen.

Beispielsweise ist aus der DE 34 02 523 C2 ein Wälzlager für Längsbewegungen mit begrenztem Schiebeweg zur Führung einer Stange mit rechteckigem Querschnitt bekannt. Die Stange ist zumindest teilweise von einem Innenteil umgeben, das mit geraden axial verlaufenden inneren Kugelbahnen versehen ist. Inbesondere kann das Innenteil als ein elastisch federndes Blechteil ausgebildet sein, welches in seiner Querschnittskontur im wesentlichen der Außenkontur der Stange entspricht und mit der Rückseite seiner Kugellaufbahnen unter Vorspannung an der Stange anliegt. Weiterhin kann das Innenteil einen axial verlaufenden durchgehenden Schlitz aufweisen. Durch diese Ausbildung des Innenteils soll die Montage des Wälzlagers erleichtert werden.

Aus der DE 36 07 633 C2 ist ein Umlauf-Kugellager für unbegrenzte Längsverschiebungen einer in einem Rohr geführten Stange insbesondere rechteckigen Querschnitts bekannt. Das Umlauf-Kugellager weist zwei Kugelführungskäfige mit in sich geschlossenen Kugelführungsbahnen auf. Die Stange ist von einer Klemmhülse aus elastisch federndem Material umschlossen, die an einer der Seiten mit einem Längsschlitz versehen ist. Ein derart ausgebildetes Umlauf-Kugellager soll eine wirtschaftliche Herstellung und Montage ermöglichen.

Aus der US 3,353,876 A ist eine Linearlageranordnung mit einer inneren Laufbahn bekannt, die einen Längsschlitz aufweisen kann.

Die bekannten Lager sind trotz der angestrebten Vereinfachungen insgesamt noch relativ aufwendig gestaltet, so dass die Einsatzmöglichkeiten im Bereich von Massenanwendungen mit hohem Kostendruck begrenzt sind.

Der Erfindung liegt demgemäß die **Aufgabe** zugrunde, eine Linearlageranordnung mit geringem Aufwand zu realisieren, um die Kosten möglichst niedrig zu halten.

Diese Aufgabe wird durch eine Linearlageranordnung mit der Merkmalskombination des Anspruchs 1 sowie durch die Verwendung einer Hülse bei einer Linearlageranordnung gemäß Anspruch 21 gelöst.

Die erfindungsgemäße Linearlageranordnung weist eine Hülse mit einer Innenfläche und einer Mantelfläche und einen Satz von Wälzkörpern auf. Die Wälzkörper rollen parallel zur Axialrichtung der Hülse auf der Mantelfläche der Hülse ab. Die Hülse ist im Querschnitt kreisringförmig ausgebildet und weist einen axial durchgehenden Schlitz auf. Die erfindungsgemäße Linearlageranordnung zeichnet sich dadurch aus, dass innerhalb der Hülse mehrere Formkörper axial nebeneinander angeordnet sind.

Die Erfindung hat den Vorteil, dass geschlitzte Hülsen einfach herzustellen sind und damit kostengünstig verfügbar sind. Dadurch kann die Linearlageranordnung relativ kostengünstig hergestellt werden. Ein weiterer Vorteil besteht darin, dass durch die Elastizität der Hülse Maßtoleranzen ausgeglichen werden können und auf eine einfache Weise eine Spielfreiheit der Linearlageranordnung erreicht werden kann. Dadurch können die Anforderungen an die Maßtoleranzen gelockert werden, so dass bei den einzelnen Komponenten der Linearlageranordnung der Herstellungsaufwand und damit die Herstellungskosten gering gehalten werden können.

Die Formkörper sind vorzugsweise rotationssymmetrisch ausgebildet. Die Formkörper können als Massivteile ausgebildet sein. Dies hat den Vorteil, dass die Formkörper sehr formstabil sind. Weiterhin ist es vorteilhaft, wenn die Formkörper aus Metall gefertigt sind.

Die Formkörper können an der Innenfläche der Hülse berührend anliegen. Insbesondere kann sich der berührende Kontakt zwischen den Formkörpern und der Innenfläche der Hülse jeweils über den gesamten Umfang der Hülse mit Ausnahme des Schlitzes erstrecken. Dies hat den Vorteil, dass die Hülse durch die Formkörper in ihrer Form stabilisiert wird. Besonders vorteilhaft ist es, wenn die Formkörper den Außendurchmesser der Hülse auf einen vorgegebenen Wert kalibrieren. Die Formkörper können mit einem vergleichsweise geringen Aufwand sehr maßgenau gefertigt werden. Auch die Wandstärke der Hülse kann mit relativ geringem Aufwand maßgenau gefertigt werden. Dies ist ausreichend, um eine Hülse mit einer sehr maßgenauen Mantelfläche zu erhalten, so dass die maßgenaue Ausbildung der Hülse mit vergleichsweise geringem Aufwand möglich ist.

Die Linearlageranordnung kann so ausgebildet sein, dass benachbarte Formkörper einander berühren. Diese Variante hat den Vorteil, dass die Hülse hohe Anforderungen an die Maßhaltigkeit erfüllen kann und hoch belastbar ist. Ebenso ist es auch möglich, dass zwischen benachbarten Formkörpern axiale Zwischenräume ausgebildet sind. Diese Variante zeichnet sich durch ein verringertes Gewicht aus, wobei die Belastbarkeit der Hülse für eine Vielzahl von Anwendungen ausreichend ist.

Bei einer vorteilhaften Weiterbildung der Linearlageranordnung sind in den axialen Zwischenräumen Distanzkörper angeordnet. Dies hat den Vorteil, dass die Formkörper gegen Verschieben gesichert sind. Die Distanzkörper können aus Kunststoff gefertigt sein. Dies bringt Vorteile in Form eines geringen Gewichts und eines niedrigen Fertigungsaufwands mit sich.

Es besteht auch die Möglichkeit, dass die axialen Zwischenräume wenigstens teilweise mit einem Füllmaterial verfüllt sind. Auf diese Weise können beliebige Abstände zwischen benachbarten Formkörpern sehr einfach realisiert werden. Außerdem kann das Füllmaterial zur Fixierung der Formkörper verwendet werden.

Die Hülse ist vorzugsweise aus gehärtetem Stahl, insbesondere aus Federstahl gefertigt. Dies ermöglicht eine hohe Belastbarkeit bei geringem Verschleiß. Insbesondere weist die Hülse wenigstens im Bereich der Mantelfläche eine Härte oberhalb 40 HRC auf.

Die Hülse kann als ein Normteil, insbesondere gemäß der Norm ISO 8752 oder ISO 13337, ausgebildet sein. Dies hat den Vorteil einer hohen Verfügbarkeit und einer definierten Qualität.

Die Linearlageranordnung ist vorzugsweise so ausgebildet, dass radial außerhalb der Hülse eine Lagereinheit angeordnet ist und die Hülse und die Lagereinheit relativ zueinander axial beweglich sind. Dabei kann die Lagereinheit einen Käfig zur Führung der Wälzkörper aufweisen. Dies bringt Vorteile bei der Montage mit sich, da die Wälzkörper im Käfig verliersicher eingeschlossen sind. Außerdem ist die durch den Käfig gewährleistete definierte Wälzkörperführung während des Betriebs der Linearlageranordnung vorteilhaft.

Der Käfig kann insbesondere in sich geschlossene Führungsbahnen für die Wälzkörper aufweisen. Dies ermöglicht eine beliebige Verschiebbarkeit zwischen der Hülse und der Lagereinheit. Alternativ kann die Linearlageranordnung auch so ausgebildet sein, dass die maximal mögliche axiale Relativbewegung zwischen der Hülse und der Lagereinheit durch die axiale Beweglichkeit der Wälzkörper begrenzt ist.

Die Hülse und die Lagereinheit sind vorzugsweise gegen Verdrehen relativ zueinander gesichert. Dadurch kann vermieden werden, dass die Wälzkörper den Schlitz in der Hülse überrollen und dabei beschädigt werden.

Die Erfindung bezieht sich weiterhin auf eine Verwendung einer Hülse bei einer Linearlageranordnung, die zusätzlich zur Hülse eine Lagereinheit mit Wälzkörpern aufweist. Die Hülse und die Lagereinheit sind relativ zueinander linear verschiebbar. Die Wälzkörper rollen auf der Hülse ab.

Die Hülse ist im Querschnitt kreisringförmig ausgebildet und weist einen axial durchgehenden Schlitz auf. Die Besonderheit besteht dabei darin, dass innerhalb der Hülse mehrere Formkörper axial nebeneinander angeordnet sind.

Die Erfindung wird nachstehend anhand der in der Zeichnung dargestellten Ausführungsbeispiele erläutert.

Es zeigen:
- Figur 1: ein Ausführungsbeispiel einer erfindungsgemäß ausgebildeten Linearlageranordnung in perspektivischer Darstellung,
- Figur 2: ein Ausführungsbeispiel der Hülse in Seitenansicht,
- Figur 3: das in Figur 2 dargestellte Ausführungsbeispiel der Hülse in Schnittdarstellung,
- Figur 4: das in Figur 2 dargestellte Ausführungsbeispiel der Hülse in Perspektivdarstellung,
- Figur 5: ein Ausführungsbeispiel einer mit Zusatzelementen ausgestatten Hülse in Seitenansicht,
- Figur 6: das in Figur 5 dargestellte Ausführungsbeispiel der Hülse in Schnittdarstellung,
- Figur 7: das in Figur 5 dargestellte Ausführungsbeispiel der Hülse in Perspektivdarstellung,
- Figur 8: ein weiteres Ausführungsbeispiel für die mit Zusatzelementen ausgestatte Hülse in Seitenansicht,
- Figur 9: das in Figur 8 dargestellte Ausführungsbeispiel der Hülse in Schnittdarstellung,
- Figur 10: das in Figur 8 dargestellte Ausführungsbeispiel der Hülse in Perspektivdarstellung,
- Figur 11: ein weiteres Ausführungsbeispiel für die mit Zusatzelementen ausgestatte Hülse in Seitenansicht,
- Figur 12: das in Figur 11 dargestellte Ausführungsbeispiel der Hülse in Schnittdarstellung und
- Figur 13: das in Figur 11 dargestellte Ausführungsbeispiel der Hülse in Perspektivdarstellung.

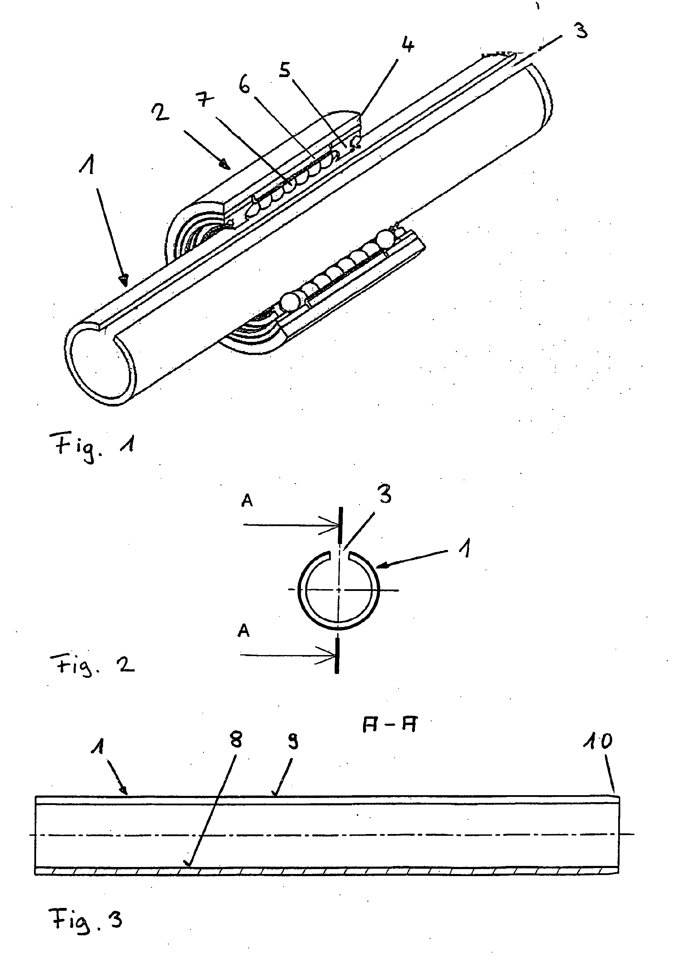

Figur 1 zeigt ein Ausführungsbeispiel einer erfindungsgemäß ausgebildeten Linearlageranordnung in perspektivischer Darstellung. Die Linearlageranordnung weist eine Hülse 1 und eine Lagereinheit 2 auf. Die Hülse 1 und die Lagereinheit 2 sind parallel zur Axialrichtung der Hülse 1 relativ zueinander verschiebbar.

Die Hülse 1 ist als eine Spannhülse mit einem kreisförmigen Querschnitt ausgebildet und weist einen Schlitz 3 auf, der sich über die gesamte axiale Länge der Hülse 1 erstreckt.

Die Lagereinheit 2 ist im dargestellten Ausführungsbeispiel als eine Kugelumlaufführung ausgebildet und weist ein Gehäuse 4, einen Käfig 5, Laufbahnplatten 6 und Kugeln 7 auf. Das Gehäuse 4, die Laufbahnplatten 6 und die Kugeln 7 sind vorzugsweise aus Metall oder Keramik gefertigt. Der Käfig 5 ist vorzugsweise aus Kunststoff gefertigt. Das Gehäuse 4 umgibt den Käfig 5 in Radialrichtung. Der Käfig 5 führt die Kugeln 7 auf in sich geschlossenen Bahnen, wobei ein Teilabschnitt der Bahnen jeweils von einer Laufbahnplatte 6 gebildet wird, die in den Käfig 5 eingesetzt ist. Die Kugeln 7 rollen somit innerhalb des vorgenannten Teilabschnitts jeweils zwischen der Laufbahnplatte 6 und der Hülse 1 ab und führen dadurch die Hülse 1 relativ zur Lagereinheit 2. Außerhalb des jeweils durch die Laufbahnplatten 6 gebildeten Teilabschnitts der Umlaufbahnen nehmen die Kugeln 7 keine Last auf und rollen zwischen dem Käfig 5 und der Hülse 1 ab.

Die in Figur 1 dargestellte Linearlageranordnung ist gegen ein Verdrehen der Lagereinheit 2 relativ zur Hülse 1 gesichert, um zu verhindern, dass die Kugeln 7 den Bereich des Spaltes 3 der Hülse 1 passieren. Die Verdrehsicherung kann beispielsweise dadurch realisiert sein, dass die Lagereinheiten 2 mehrerer Linearlageranordnungen starr miteinander verbunden sind, insbesondere durch eine Trägerplatte zur Aufnahme einer Maschine oder eines Maschinenteils.

Alternativ zur vorstehend beschriebenen Ausführung der Lagereinheit 2 als eine Kugelumlaufführung ist es auch möglich, die Lagereinheit 2 für einen begrenzten Verschiebeweg auszubilden und keinen Umlauf der Kugeln 7 vorzusehen.

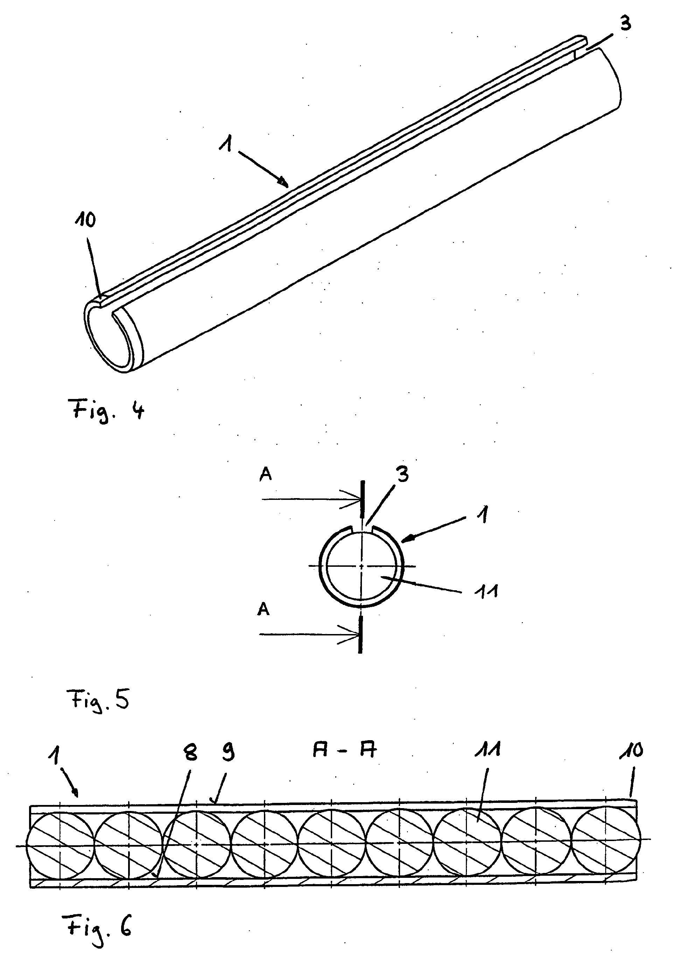

Figur 2 zeigt ein Ausführungsbeispiel der Hülse 1 in Seitenansicht. Eine zugehörige Schnittdarstellung ist in Figur 3, eine zugehörige Perspektivdarstellung in Figur 4 dargestellt.

Die Hülse 1 weist eine Innenfläche 8 und eine Mantelfläche 9 auf. Im Bereich eines axialen Endes weist die Hülse 1 auf ihrer Mantelfläche 9 eine Fase 10 auf. Ebenso ist es auch möglich, dass die Hülse 1 an beiden axialen Enden je eine Fase 10 aufweist. Insbesondere bei einem Hülsendurchmesser von weniger als 10 mm kann auf die Fase 10 verzichtet werden. Die Hülse 1 weist in Radialrichtung eine gewisse Elastizität auf und ist vorzugsweise aus Federstahl gefertigt. Bevorzugte Werte für die Härte der Hülse 1 liegen oberhalb 40 HRC. Der arithmetische Mittenrauhwert der Hülse 1 beträgt vorzugsweise maximal etwa Ra = 0,4. Insbesondere ist die Hülse 1 als eine genormte Spannhülse nach DIN oder EN oder ISO ausgebildet, beispielsweise gemäß der Norm ISO 8752 oder ISO 13337. Besonders gut geeignet sind Spannhülsen gemäß der Norm ISO 8752, da diese eine vergleichsweise hohe mechanische Stabilität aufweisen.

Das in den Figuren 2 bis 4 dargestellte Ausführungsbeispiel der Hülse 1 zeichnet sich durch sein geringes Gewicht und eine kostengünstige Verfügbarkeit aus. Allerdings ist der Außendurchmesser der Hülse 1 infolge der geschlitzten Ausführung mit relativen Toleranzen behaftet. Es besteht allerdings die Möglichkeit, diese Toleranzen zu reduzieren. Dies wird im folgenden näher erläutert.

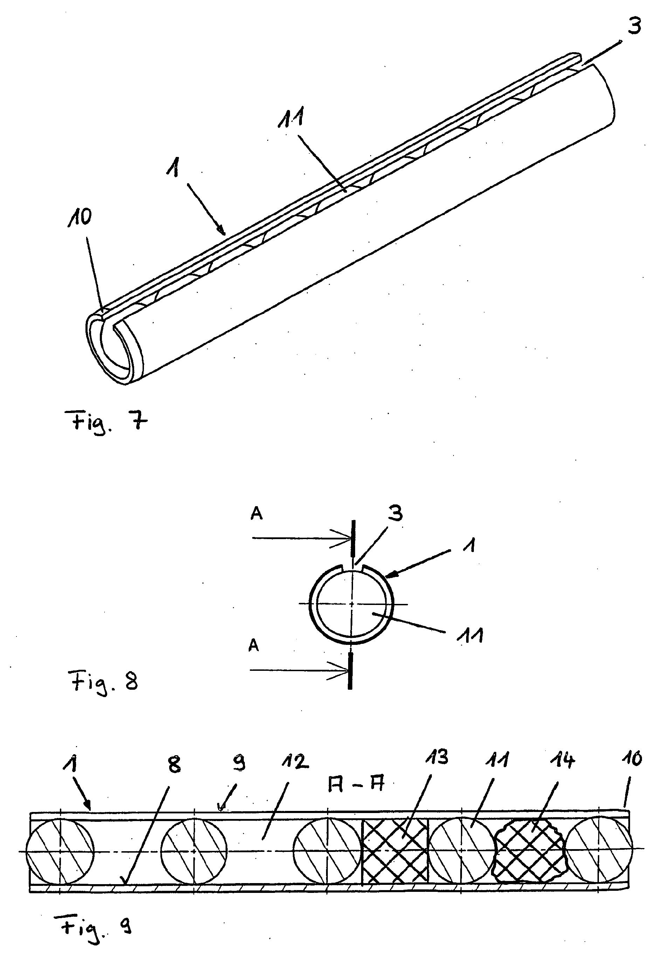

Figur 5 zeigt ein Ausführungsbeispiel einer mit Zusatzelementen ausgestatteten Hülse 1 in Seitenansicht. Eine zugehörige Schnittdarstellung ist in Figur 6, eine zugehörige Perspektivdarstellung in Figur 7 dargestellt.

Die Hülse 1 selbst ist analog zu den Figuren 2 bis 4 ausgebildet. Abweichend von den Figuren 2 bis 4 weist die in den Figuren 5 bis 7 dargestellte Hülse 1 in ihrem Innenraum Kugeln 11 auf, die vorzugsweise aus Metall gefertigt sind. Die Kugeln 11 sind in Axialrichtung nebeneinander angeordnet und berühren sich jeweils paarweise. Außerdem liegen die Kugeln 11 berührend an der Innenfläche 8 der Hülse 1 an. Insbesondere ist der Durchmesser der Kugeln 11 geringfügig größer gewählt als der Innendurchmesser, den die Hülse 1 ohne die Kugeln 11 aufweisen würde. Demgemäß wird die Hülse 1 beim Einführen der Kugeln 11 in Radialrichtung geringfügig elastisch aufgeweitet.

Da die Kugeln 11 berührend an der Innenfläche 8 der Hülse 1 anliegen und mit relativ wenig Aufwand sehr genau gefertigt werden können, kann das gewünschte Endmaß hinsichtlich des Außendurchmessers der Hülse 1 über den Durchmesser der Kugeln 11 sehr präzise eingestellt werden. Dabei ist allerdings noch zu berücksichtigen, dass sich die Toleranz der Wandstärke der Hülse 1 negativ auf die erzielbare Präzision des Außendurchmessers der Hülse 1 auswirkt. Da die Hülse 1 jedoch mit einer relativ geringen Toleranz der Wandstärke hergestellt werden kann, lässt sich auf die geschilderte Weise insgesamt eine hohe Präzision beim Außendurchmesser der Hülse 1 erzielen.

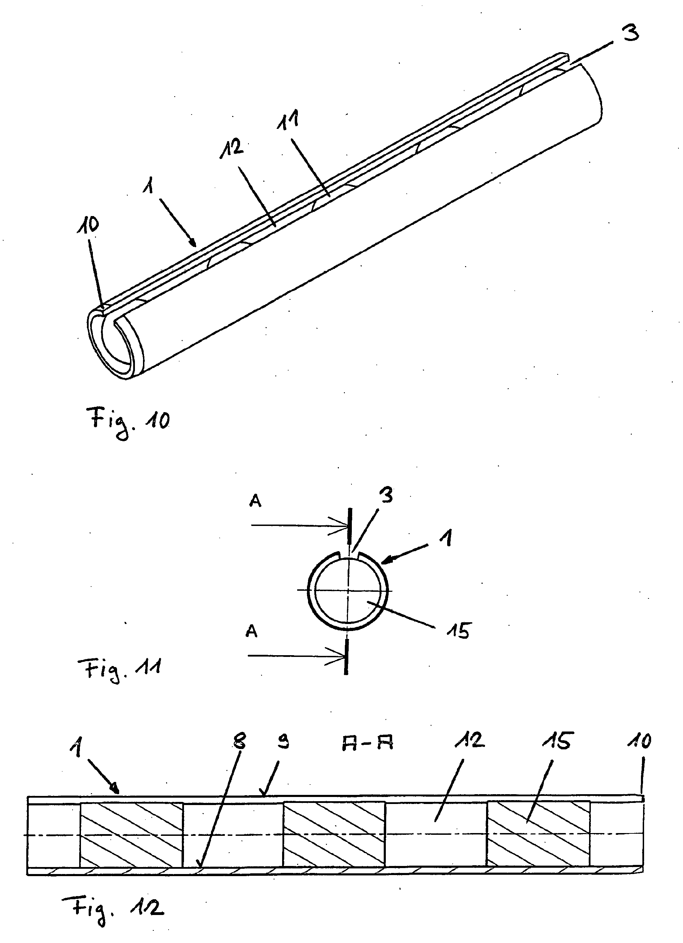

Figur 8 zeigt ein weiteres Ausführungsbeispiel für die mit Zusatzelementen ausgestatteten Hülse 1 in Seitenansicht. Eine zugehörige Schnittdarstellung ist in Figur 9, eine zugehörige Perspektivdarstellung in Figur 10 dargestellt.

Das in den Figuren 8 bis 10 dargestellte Ausführungsbeispiel zeichnet sich dadurch aus, dass die in der Hülse 1 angeordneten Kugeln 11 einander nicht berühren, sondern jeweils in einem axialen Abstand zueinander angeordnet sind, d. h. zwischen zwei axial benachbarten Kugeln 11 ist jeweils ein Zwischenraum 12 ausgebildet. Dies hat zur Folge, dass pro Längeneinheit eine geringere Anzahl von Kugeln 11 benötigt wird und die Hülse 1 somit ein geringeres Gewicht hat als beim Ausführungsbeispiel mit den dicht gepackten Kugeln 11. Die Abstände zwischen den Kugeln 11 können dabei so gewählt werden, dass sich für den jeweiligen Anwendungsfall ein guter Kompromiss zwischen Maßhaltigkeit und Formstabilität auf der einen Seite und Gewicht auf der anderen Seite ergibt. Durch die Klemmwirkung der Hülse 1 werden die Kugeln 11 in ihrer axialen Position fixiert. Falls dies nicht ausreichend ist, können zusätzliche Maßnahmen zur axialen Fixierung der Kugeln 11 getroffen werden. Zwei mögliche Maßnahmen sind in Figur 9 dargestellt.

Gemäß einer ersten Maßnahme sind in den Zwischenräumen 12 zwischen benachbarten Kugeln 11 Distanzkörper 13 angeordnet. Die Distanzkörper 13 bestehen vorzugsweise aus Kunststoff und können lose in der Hülse 1 angeordnet sein oder an der Hülse 1 befestigt und dadurch gegen axiales Verschieben gesichert sein. Die Formgebung der Distanzkörper 13 kann auf Basis von Zweckmäßigkeitserwägungen festgelegt werden. Beispielsweise können die Distanzkörper 13 kugelförmig oder zylinderförmig ausgebildet sein.

Die Distanzkörper 13 liegen jeweils berührend an den zu ihnen benachbarten Kugeln 11 an und verhindern dadurch, dass die Kugeln 11 einander stärker axial angenähert werden als durch die Distanzkörper 13 vorgegeben. Außerdem verhindern die Distanzkörper 13, dass der Abstand zwischen benachbarten Kugeln 11 vergrößert wird, da eine Vergrößerung des Abstands innerhalb eines Kugelpaars nur möglich ist, wenn innerhalb eines anderen Kugelpaars eine Reduzierung des Abstands erfolgt. Letzteres wird aber durch die Distanzkörper 13 verhindert. Allerdings kann mit den Distanzkörpern 13 nicht verhindert werden, dass die Kugeln 11 an den axialen Enden der Hülse 1 axial aus der Hülse 1 gepresst werden. Die beiden äußersten Kugeln 11 müssen deshalb auf andere Weise fixiert werden, beispielsweise durch wenigstens teilweises Verschließen der Hülse 1 im Bereich ihrer axialen Enden.

Gemäß einer zweiten Maßnahme sind die Zwischenräume 12 zwischen benachbarten Kugeln 11 ganz oder teilweise mit einem Füllmaterial 14 gefüllt, beispielsweise einem Kunststoffschaum ausreichender Festigkeit. Dabei besteht die Möglichkeit, das Füllmaterial 14 in flüssigem oder pastösem Zustand in die Zwischenräume 12 einzubringen und dann aushärten zu lassen. Durch den Schlitz 3 ist eine gute Zugänglichkeit der Zwischenräume 12 gewährleistet. Die Aushärtung des Füllmaterials 14 kann thermisch, chemisch oder durch Bestrahlung beschleunigt werden. Falls das Füllmaterial 14 eine ausreichende Klebewirkung aufweist, kann die bei der ersten Maßnahme angesprochene zusätzliche Fixierung der axial äußersten Kugeln 11 entfallen.

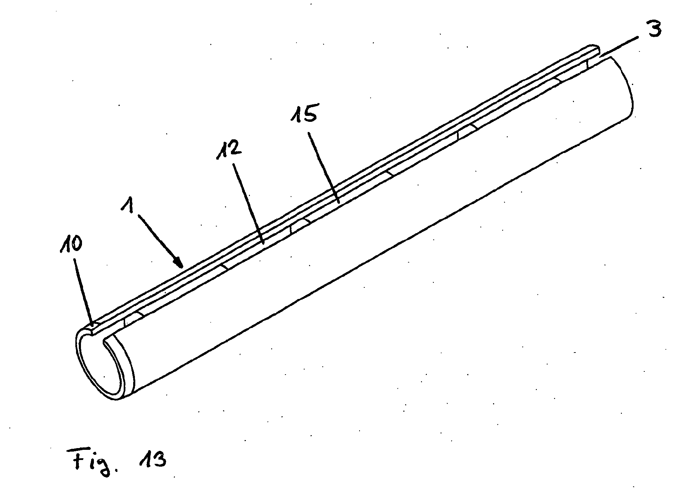

Figur 11 zeigt ein weiteres Ausführungsbeispiel für die mit Zusatzelementen ausgestattete Hülse 1 in Seitenansicht. Eine zugehörige Schnittdarstellung ist in Figur 12, eine zugehörige Perspektivdarstellung in Figur 13 dargestellt.

Gemäß dem in den Figuren 11 bis 13 dargestellten Ausführungsbeispiel sind innerhalb der Hülse 1 mehrere Zylinder 15, die vorzugsweise aus Metall gefertigt sind, jeweils in einem axialen Abstand zueinander angeordnet. Durch die große Kontaktfläche zwischen den Zylindern 15 und der Innenfläche 8 der Hülse 1 kann eine besonders hohe Präzision und Formstabilität der Hülse 1 erreicht werden. Ansonsten gilt das zu den Ausführungsbeispielen mit den Kugeln 11 Gesagte analog, d. h. es ist beispielsweise möglich, die Zylinder 15 ohne Zwischenräume 2 axial berührend anzuordnen oder in den Zwischenräumen 12 Distanzkörper 13 vorzusehen bzw. die Zwischenräume 12 ganz oder teilweise mit dem bereits beschriebenen Füllmaterial 14 aufzufüllen.

### Bezugszeichenliste

- 1: Hülse
- 2: Lagereinheit
- 3: Schlitz
- 4: Gehäuse
- 5: Käfig
- 6: Laufbahnplatte
- 7: Kugel
- 8: Innenfläche
- 9: Mantelfläche
- 10: Fase
- 11: Kugel
- 12: Zwischenraum
- 13: Distanzkörper
- 14: Füllmaterial
- 15: Zylinder

## Patentansprüche

1. Linearlageranordnung mit einer Hülse (1), die eine Innenfläche (8) und eine Mantelfläche (9) aufweist und mit einem Satz von Wälzkörpern (7), die parallel zur Axialrichtung der Hülse (1) auf der Mantelfläche (9) der Hülse (1) abrollen, wobei die Hülse (1) im Querschnitt kreisringförmig ausgebildet ist und einen axial durchgehenden Schlitz (3) aufweist, **dadurch gekennzeichnet, dass** innerhalb der Hülse (1) mehrere Formkörper (11, 15) axial nebeneinander angeordnet sind.

2. Linearlageranordnung nach Anspruch 1, **dadurch gekennzeichnet, dass** die Formkörper (11, 15) rotationssymmetrisch ausgebildet sind.

3. Linearlageranordnung nach einem der Ansprüche 1 oder 2, **dadurch gekennzeichnet, dass** die Formkörper (11, 15) als Massivteile ausgebildet sind.

4. Linearlageranordnung nach einem der Ansprüche 1 bis 3, **dadurch gekennzeichnet, dass** die Formkörper (11, 15) aus Metall gefertigt sind.

5. Linearlageranordnung nach einem der Ansprüche 1 bis 4, **dadurch gekennzeichnet, dass** die Formkörper (11, 15) an der Innenfläche (8) der Hülse (1) berührend anliegen.

6. Linearlageranordnung nach Anspruch 5, **dadurch gekennzeichnet, dass** sich der berührende Kontakt zwischen den Formkörpern (11, 15) und der Innenfläche (8) der Hülse (1) jeweils über den gesamten Umfang der Hülse (1) mit Ausnahme des Schlitzes (3) erstreckt.

7. Linearlageranordnung nach einem der Ansprüche 1 bis 6, **dadurch gekennzeichnet, dass** die Formkörper (11, 15) den Außendurchmesser der Hülse (1) auf einen vorgegebenen Wert kalibrieren.

8. Linearlageranordnung nach einem der Ansprüche 1 bis 7, **dadurch gekennzeichnet, dass** benachbarte Formkörper (11, 15) einander berühren.

9. Linearlageranordnung nach einem der Ansprüche 1 bis 8, **dadurch gekennzeichnet, dass** zwischen benachbarten Formkörpern (11, 15) axiale Zwischenräume (12) ausgebildet sind.

10. Linearlageranordnung nach Anspruch 9, **dadurch gekennzeichnet, dass** in den axialen Zwischenräumen (12) Distanzkörper (13) angeordnet sind.

11. Linearlageranordnung nach Anspruch 10, **dadurch gekennzeichnet, dass** die Distanzkörper (13) aus Kunststoff gefertigt sind.

12. Linearlageranordnung nach Anspruch 9, **dadurch gekennzeichnet, dass** die axialen Zwischenräume (12) wenigstens teilweise mit einem Füllmaterial (14) verfüllt sind.

13. Linearlageranordnung nach einem der vorhergehenden Ansprüche, **dadurch gekennzeichnet, dass** die Hülse (1) aus gehärtetem Stahl, insbesondere aus Federstahl gefertigt ist.

14. Linearlageranordnung nach einem der vorhergehenden Ansprüche, **dadurch gekennzeichnet, dass** die Hülse (1) wenigstens im Bereich der Mantelfläche (9) eine Härte oberhalb 40 HRC aufweist.

15. Linearlageranordnung nach einem der vorhergehenden Ansprüche, **dadurch gekennzeichnet, dass** die Hülse (1) als ein Normteil, insbesondere gemäß der Norm ISO 8752 oder ISO 13337, ausgebildet ist.

16. Linearlageranordnung nach einem der vorhergehenden Ansprüche, **dadurch gekennzeichnet, dass** radial außerhalb der Hülse (1) eine Lagereinheit (2) angeordnet ist und die Hülse (1) und die Lagereinheit (2) relativ zueinander axial beweglich sind.

17. Linearlageranordnung nach Anspruch 16, **dadurch gekennzeichnet, dass** die Lagereinheit (2) einen Käfig (5) zur Führung der Wälzkörper (7) aufweist.

18. Linearlageranordnung nach Anspruch 17, **dadurch gekennzeichnet, dass** der Käfig (5) in sich geschlossene Führungsbahnen für die Wälzkörper (7) aufweist.

19. Linearlageranordnung nach einem der Ansprüche 16 bis 18, **dadurch gekennzeichnet, dass** die maximal mögliche axiale Relativbewegung zwischen der Hülse (1) und der Lagereinheit (2) durch die axiale Beweglichkeit der Wälzkörper (7) begrenzt ist.

20. Linearlageranordnung nach einem der Ansprüche 16 bis 19, **dadurch gekennzeichnet, dass** die Hülse (1) und die Lagereinheit (2) gegen Verdrehen relativ zueinander gesichert sind.

21. Verwendung einer Hülse (1) bei einer Linearlageranordnung, die zusätzlich zur Hülse (1) eine Lagereinheit (2) mit Wälzkörpern (7) aufweist, wobei die Hülse (1) und die Lagereinheit (2) relativ zueinander linear verschiebbar sind, die Wälzkörper (7) auf der Hülse (1) abrollen, die Hülse (1) im Querschnitt kreisringförmig ausgebildet ist und einen axial durchgehenden Schlitz (3) aufweist, **dadurch gekennzeichnet, dass** innerhalb der Hülse (1) mehrere Formkörper (11, 15) axial nebeneinander angeordnet sind.

## Claims

1. Linear bearing arrangement having a sleeve (1) which has an inner face (8) and a shell face (9), and having a set of rolling bodies (7) which roll parallel to the axial direction of the sleeve (1) on the shell face (9) of the sleeve (1), the sleeve (1) being configured with a circularly annular cross section and having an axially continuous slot (3), **characterized in that** a plurality of shaped bodies (11, 15) are arranged axially next to one another within the sleeve (1).

2. Linear bearing arrangement according to Claim 1, **characterized in that** the shaped bodies (11, 15) are of rotationally symmetrical configuration.

3. Linear bearing arrangement according to either of Claims 1 and 2, **characterized in that** the shaped bodies (11, 15) are configured as solid parts.

4. Linear bearing arrangement according to one of Claims 1 to 3, **characterized in that** the shaped bodies (11, 15) are manufactured from metal.

5. Linear bearing arrangement according to one of Claims 1 to 4, **characterized in that** the shaped bodies (11, 15) bear in a touching manner against the inner face (8) of the sleeve (1).

6. Linear bearing arrangement according to Claim 5, **characterized in that** the touching contact between the shaped bodies (11, 15) and the inner face (8) of the sleeve (1) extends in each case over the entire circumference of the sleeve (1) with the exception of the slot (3).

7. Linear bearing arrangement according to one of Claims 1 to 6, **characterized in that** the shaped bodies (11, 15) calibrate the external diameter of the sleeve (1) to a predefined value.

8. Linear bearing arrangement according to one of Claims 1 to 7, **characterized in that** adjacent shaped bodies (11, 15) touch one another.

9. Linear bearing arrangement according to one of Claims 1 to 8, **characterized in that** axial intermediate spaces (12) are formed between adjacent shaped bodies (11, 15).

10. Linear bearing arrangement according to Claim 9, **characterized in that** spacer bodies (13) are arranged in the axial intermediate spaces (12).

11. Linear bearing arrangement according to Claim 10, **characterized in that** the spacer bodies (13) are manufactured from plastic.

12. Linear bearing arrangement according to Claim 9, **characterized in that** the axial intermediate spaces (12) are filled at least partially with a filling material (14).

13. Linear bearing arrangement according to one of the preceding claims, **characterized in that** the sleeve (1) is manufactured from hardened steel, in particular from spring steel.

14. Linear bearing arrangement according to one of the preceding claims, **characterized in that** the sleeve (1) has a hardness above 40 HRC at least in the region of the shell face (9).

15. Linear bearing arrangement according to one of the preceding claims, **characterized in that** the sleeve (1) is configured as a standardized part, in particular according to the ISO 8752 or ISO 13337 standard.

16. Linear bearing arrangement according to one of the preceding claims, **characterized in that** a bearing unit (2) is arranged radially outside the sleeve (1), and the sleeve (1) and the bearing unit (2) can be moved axially relative to one another.

17. Linear bearing arrangement according to Claim 16, **characterized in that** the bearing unit (2) has a cage (5) for guiding the rolling bodies (7).

18. Linear bearing arrangement according to Claim 17, **characterized in that** the cage (5) has self-contained guide tracks for the rolling bodies (7).

19. Linear bearing arrangement according to one of Claims 16 to 18, **characterized in that** the maximum possible axial relative movement between the sleeve (1) and the bearing unit (2) is limited by the axial movability of the rolling bodies (7).

20. Linear bearing arrangement according to one of Claims 16 to 19, **characterized in that** the sleeve (1) and the bearing unit (2) are secured against twisting relative to one another.

21. Use of a sleeve (1) in a linear bearing arrangement which, in addition to the sleeve (1), has a bearing unit (2) with rolling bodies (7), the sleeve (1) and the bearing unit (2) being linearly displaceable relative to one another, the rolling bodies (7) rolling on the sleeve (1), and the sleeve (1) being configured with a circularly annular cross section and having an axially continuous slot (3), **characterized in that** a plurality of shaped bodies (11, 15) are arranged axially next to one another within the sleeve (1).

## Revendications

1. Agencement de palier linéaire avec une douille (1), qui présente une surface intérieure (8) et une surface latérale (9) et avec un ensemble de corps de roulement (7), qui roulent parallèlement à la direction axiale de la douille (1) sur la surface latérale (9) de la douille (1), dans lequel la douille (1) est de forme annulaire circulaire en section transversale et présente une fente axialement continue (3), **caractérisé en ce que** plusieurs corps moulés (11, 15) sont disposés axialement l'un à côté de l'autre à l'intérieur de la douille (1).

2. Agencement de palier linéaire selon la revendication 1, **caractérisé en ce que** les corps moulés (11, 15) sont de forme symétrique en rotation.

3. Agencement de palier linéaire selon l'une des revendications 1 ou 2, **caractérisé en ce que** les corps moulés (11, 15) sont réalisés sous forme de pièces massives.

4. Agencement de palier linéaire selon l'une quelconque des revendications 1 à 3, **caractérisé en ce que** les corps moulés (11, 15) sont fabriqués en métal.

5. Agencement de palier linéaire selon l'une quelconque des revendications 1 à 4, **caractérisé en ce que** les corps moulés (11, 15) sont placés en contact sur la surface intérieure (8) de la douille (1).

6. Agencement de palier linéaire selon la revendication 5, **caractérisé en ce que** le contact physique entre les corps moulés (11, 15) et la surface intérieure (8) de la douille (1) s'étend chaque fois sur tout le pourtour de la douille (1) à l'exception de la fente (3).

7. Agencement de palier linéaire selon l'une quelconque des revendications 1 à 6, **caractérisé en ce que** les corps moulés (11, 15) calibrent le diamètre extérieur de la douille (1) à une valeur prédéterminée.

8. Agencement de palier linéaire selon l'une quelconque des revendications 1 à 7, **caractérisé en ce que** des corps moulés voisins (11, 15) se touchent mutuellement.

9. Agencement de palier linéaire selon l'une quelconque des revendications 1 à 8, **caractérisé en ce que** des espaces intermédiaires axiaux (12) sont formés entre des corps moulés voisins (11, 15).

10. Agencement de palier linéaire selon la revendication 9, **caractérisé en ce que** des corps d'écartement (13) sont disposés dans les espaces intermédiaires axiaux (12).

11. Agencement de palier linéaire selon la revendication 10, **caractérisé en ce que** les corps d'écartement (13) sont fabriqués en matière plastique.

12. Agencement de palier linéaire selon la revendication 9, **caractérisé en ce que** les espaces intermédiaires axiaux (12) sont remplis au moins partiellement d'un matériau de remplissage (14).

13. Agencement de palier linéaire selon l'une quelconque des revendications précédentes, **caractérisé en ce que** la douille (1) est fabriquée en acier trempé, en particulier en acier à ressort.

14. Agencement de palier linéaire selon l'une quelconque des revendications précédentes, **caractérisé en ce que** la douille (1) présente une dureté supérieure à 40 HRC au moins dans la région de la surface latérale (9).

15. Agencement de palier linéaire selon l'une quelconque des revendications précédentes, **caractérisé en ce que** la douille (1) est réalisée comme une pièce normalisée, en particulier selon la norme ISO 8752 ou ISO 13337.

16. Agencement de palier linéaire selon l'une quelconque des revendications précédentes, **caractérisé en ce qu'**une unité de palier (2) est disposée radialement à l'extérieur de la douille (1) et la douille (1) et l'unité de palier (2) sont mobiles axialement l'une par rapport à l'autre.

17. Agencement de palier linéaire selon la revendication 16, **caractérisé en ce que** l'unité de palier (2) comporte une cage (5) pour le guidage des corps de roulement (7).

18. Agencement de palier linéaire selon la revendication 17, **caractérisé en ce que** la cage (5) présente des voies de guidage fermées sur elles-mêmes pour les corps de roulement (7).

19. Agencement de palier linéaire selon l'une quelconque des revendications 16 à 18, **caractérisé en ce que** le mouvement relatif axial maximal possible entre la douille (1) et l'unité de palier (2) est limité par la mobilité axiale des corps de roulement (7).

20. Agencement de palier linéaire selon l'une quelconque des revendications 16 à 19, **caractérisé en ce que** la douille (1) et l'unité de palier (2) sont calées contre une rotation l'une par rapport à l'autre.

21. Utilisation d'une douille (1) dans un agencement de palier linéaire, qui présente en plus de la douille (1) une unité de palier (2) avec des corps de roulement (7), dans lequel la douille (1) et l'unité de palier (2) sont déplaçables linéairement l'une par rapport à l'autre, les corps de roulement (7) roulent sur la douille (1), la douille (1) est de forme annulaire circulaire en section transversale et présente une fente axialement continue (3), **caractérisée en ce que** plusieurs corps moulés (11, 15) sont disposés axialement l'un à côté de l'autre à l'intérieur de la douille (1).
